# EUROPÄISCHE PATENTSCHRIFT

(11) **EP 4 194 755 B1**
(45) Veröffentlichungstag und Bekanntmachung des Hinweises auf die Patenterteilung: **17.04.2024**
(21) Anmeldenummer: 21213746.7
(22) Anmeldetag: 10.12.2021
(51) Int. Cl.: F23N 5/08, F23D 14/14

(54) **INFRAROTSTRAHLER**
INFRARED RADIATOR
ÉMETTEUR INFRAROUGE

(43) Veröffentlichungstag der Anmeldung: 14.06.2023
(73) Patentinhaber: Schwank GmbH, 50735 Köln (DE)
(72) Erfinder: Kreis, Edgar, 63579 Freigericht (DE); Genzel, Alexander, 53179 Bonn (DE); Stohler, Torsten, 40822 Mettmann (DE); Renner, Thomas, 50389 Wesseling (DE)
(74) Vertreter: Patentanwälte Dörner & Kötter PartG mbB

(56) Entgegenhaltungen:
- US-A- 5 046 944
- US-A1- 2017 051 913
- US-A1- 2018 038 588

## Beschreibung

Die Erfindung betrifft einen Infrarotstrahler, mit einem Brenner und einem Gebläse, wobei der Brenner mit einer Brenngaszuführung verbunden ist, wobei das Gebläse dazu eingerichtet ist, dem Brenner Verbrennungsluft zuzuführen, nach dem Oberbegriff des Patentanspruchs 1.

Im gewerblichen und industriellen Bereich werden zur Beheizung von Produktions- und Lagerstätten häufig Infrarotstrahler eingesetzt. Diese werden insbesondere an der Decke oder der Wand installiert und dienen der Erwärmung hoher oder nur mäßig gedämmter Räume. Infrarotstrahler zeichnen sich dadurch aus, dass durch ihre Infrarotstrahlung hauptsächlich die angestrahlten Oberflächen erwärmt werden. Hierdurch geben sie ihre Wärme nahezu verlustfrei ab. Zuglufterscheinungen, wie sie bei konventionellen Verbrennungssystemen auftreten, werden hierbei vermieden. Zur Erhöhung des Wirkungsgrades von Infrarotstrahlern kommen häufig Reflektoren zum Einsatz. Derartige Infrarotstrahler sind in unterschiedlichen Ausgestaltungen beispielsweise in der US 2017/0051913 A1, der US 2018/0038588 A1 und der US 5,046,944 beschrieben.

Im Bereich der Infrarotstrahler wird zwischen Hellstrahlern und Dunkelstrahlern unterschieden. Bei Hellstrahlern wird ein Brenngas-Luftgemisch an der Oberfläche einer oder mehrerer hierzu angeordneter keramischer Strahlplatten verbrannt. Als Brenngas wird entweder Erdgas oder Flüssiggas (Propangas oder Biogas) verwendet. Der Name Hellstrahler basiert auf der sichtbaren Verbrennung des Brenngas-Luftgemischs auf der keramischen Strahlplatte, welche hierdurch aufglüht. Hierzu weist die keramische Strahlplatte parallel zueinander angeordnete Flammendurchtrittskanäle mit zur Abstrahlungsseite angebrachten, häufig konischen Vertiefungen auf. Bei der Verbrennung erfolgt die Flammbildung im Wesentlichen in den Vertiefungen, wodurch eine gleichmäßige Erwärmung der Seitenwände der Vertiefungen und den zwischen den Vertiefungen gebildeten Stegen erfolgt. Derartige Hellstrahler sind beispielsweise in der EP 2 014 980 A1 beschrieben.

Dunkelstrahler weisen als Strahlungselemente ein oder mehrere Strahlungsrohre auf, welchen mindestens ein Brenner zugeordnet ist. Durch Verbrennung eines Gemisches aus Brenngas und Luft innerhalb des Brenners wird eine Flamme erzeugt, welche mithilfe eines Gebläses über die gesamte Länge des Strahlungsrohres verteilt werden kann. Als Brenngas wird ebenfalls entweder Erdgas oder Flüssiggas (Propangas oder Biogas) verwendet- Die Strahlrohre sind regelmäßig durchgängig im Nachgang an den Brenner linear oder U-förmig angeschlossen und sollen die durch die Flamme erzeugte Wärme gleichmäßig über den gesamten Rohrverlauf abstrahlen. Das Strahlungsrohr wird durch die Flamme und die dadurch erzeugten Heißgase gleichmäßig erhitzt und generiert eine Wärmestrahlung, die auf einen zu erwärmenden Bereich abgestrahlt wird. Die durch die Verbrennung entstehenden Abgase werden mithilfe des Gebläses aus dem Strahlungsrohr entfernt, beispielsweise über Abgasrohre an die Außenluft abgeführt. Derartige Dunkelstrahler sind beispielsweise in der EP 2 708 814 A1 beschrieben.

Um bei solchen gasbetriebenen Infrarotstrahlern einen unerwünschten Gasaustritt zu verhindern, ist es erforderlich, die Flamme der Gasverbrennung zu überwachen. Die Flammenüberwachung erfolgt üblicherweise mittels lonisationselektroden, wie beispielsweise in der DE 10 2014 019 765 A1 beschrieben. Ionisationselektroden nutzen den Gleichrichtereffekt einer Flamme zum Erkennen des Vorhandenseins einer Verbrennung. Hierbei wird an der Ionisationselektrode angelegter Wechselstrom wird bei Vorhandensein einer Flamme in Gleichstrom gewandelt. Nachteilig an dieser Art der Flammüberwachung ist, dass die lonisationselektrode in die Gasflamme eindringen muss, wodurch ihre Lebensdauer beschränkt ist. Die Haltbarkeit der lonisationselektrode hängt dabei insbesondere von der Temperatur der Verbrennung ab. Je höher die Temperatur des Brenngases, umso geringer ist die Standzeit der erforderlichen lonisationselektrode.

Hier will die Erfindung Abhilfe schaffen. Der Erfindung liegt die Aufgabe zugrunde, einen Infrarotstrahler bereitzustellen, der eine zuverlässige und wartungsarme Flammüberwachung auch bei Brenngasen mit hoher Verbrennungstemperatur, insbesondere Wasserstoff ermöglicht. Gemäß der Erfindung wird diese Aufgabe durch die Merkmale des kennzeichnenden Teils des Patentanspruchs 1 gelöst.

Mit der Erfindung ist ein Infrarotstrahler in Form eines Dunkelstrahlers bereitgestellt, der eine zuverlässige und wartungsarme Flammüberwachung ermöglicht. Dadurch, dass die Brenngaszuführung mit einer Wasserstoffquelle als Brenngasquelle verbindbar ist, wobei ein UV-Sensor angeordnet ist, der eingerichtet ist, wenigstens einen Parameter der durch den Brenner erzeugten Flamme zu detektieren, ist auch bei der hohen Flammtemperatur des Brenngases eine wartungsarme Flammüberwachung ermöglicht. Der zur Flammüberwachung eingesetzte UV-Sensor hat keinen Kontakt mit der Flamme und unterliegt daher keinem hitzebedingten Verschleiß.

Durch die Verwendung von Wasserstoff als Brenngas bewirkt eine reduzierte Schadstoffemission. Da Wasserstoff keinen Kohlenstoff enthält, sind in dem Abgas theoretisch keine kohlenstoffhaltigen Schadstoffe wie Kohlenstoffmonoxid, Kohlenstoffdioxid oder Kohlenwasserstoffe enthalten. Überraschen wurde gefunden, dass durch den UV-Sensor eine zuverlässige Überwachung der unsichtbaren Wasserstoffflame ermöglicht.

Der Infrarotstrahler ist ein Dunkelstrahler, der ein Strahlrohr umfasst, in dem der Brenner angeordnet ist, wobei der UV-Sensor auf den Grund der Flamme ausgerichtet ist. Vorteilhaft ist das Strahlrohr mit einem Sichtfenster versehen, wobei der UV-Sensor von außerhalb des Strahlrohres durch das Sichtfenster auf den Grund der Flamme ausgerichtet ist. Hierdurch ist eine Beeinträchtigung des UV-Sensors durch die Flammenhitze weiter vermieden.

In Ausgestaltung der Erfindung ist das Strahlrohr mit einer Abgasabführleitung verbunden, wobei dem Brenner in Flammrichtung vorgeschaltet eine Verbrennungsluft-Mischkammer angeordnet ist, die mit einer Verbrennungsluftquelle und der Abgasabführleitung verbunden ist. Durch die Zuführung von Abgasen zur Verbrennungsluft ist eine Sauerstoffminderung erzielt, wodurch eine Senkung der Flammtemperatur ermöglicht ist. Darüber hinaus ist durch die Rezirkulation des Abgases eine Minderung der Stickoxidemission bewirkt.

In weiterer Ausgestaltung der Erfindung ist das Gebläse dem Brenner in Flammrichtung vorgeschaltet angeordnet und die Verbrennungsluft-Mischkammer ist innerhalb des Gebläses angeordnet. Hierdurch ist eine gute Vermischung von Verbrennungsluft und Abgas innerhalb des Gebläses erzielt.

In Weiterbildung der Erfindung ist an der Abführleitung eine Verstelleinrichtung angeordnet, durch welche das Verhältnis des Abgasvolumenstroms der Abgasabführleitung zum Verbrennungsluft-Volumenstrom der Verbrennungsluftquelle einstellbar ist. Hierdurch ist eine Einstellung des Sauerstoffgehalts des Verbrennungsluft-Abgas-Gemischs ermöglicht.

In Weiterbildung der Erfindung ist der UV- Sensor mit einer mit der Brenngaszuführung verbundenen Stelleinrichtung zur Unterbrechung und/oder zur Einstellung der Wasserstoffzufuhr verbunden. Hierdurch ist bei Erlöschen der Flamme eine Unterbrechung der Wasserstoffzufuhr ermöglicht, wodurch einem ungewünschten Austritt von Wasserstoff entgegengewirkt ist.

In Ausgestaltung der Erfindung ist der UV-Sensor zur UV-Resonanz-Absorptionsspektroskopie eingerichtet. Hierdurch ist eine Detektierung des NOX-Gehaltes der Flamme und des diese umgebenden Verbrennungsabgases ermöglicht.

In weiterer Ausgestaltung der Erfindung ist die Stelleinrichtung und/oder die Verstelleinrichtung mit einem Steuer- und Regelmodul verbunden, das programmiert ist, die Flammeigenschaften durch Vergleich der von dem UV-Sensor übermittelten Ist-Parameter mit hinterlegten Sollparameter durch Veränderung des Wasserstoffvolumenstroms und/oder des Verbrennungsluftvolumenstroms und/oder des Verhältnisses von Abgasstrom und Verbrennungsluftstrom einzuregeln.

Vorteilhaft ist der Ist-Parameter ein von dem UV-Sensor detektierter NOX-Wert, wobei das Steuer- und Regelmodul programmiert ist, auf Basis der Differenz des Ist-Wertes mit einem hiterlegten Sollwert die Flammtemperatur durch Veränderung des Wasserstoffvolumenstroms und/oder des Verbrennungsluftvolumenstroms und/oder des Verhältnisses von Abgasstrom und Verbrennungsluftstrom einzuregeln. Hierdurch ist eine Temperaturregelung der Flamme über eine Steuerung dieses Mischungsverhältnisses über eine NOX-Sollwertvorgabe ermöglicht. Eine Änderung der Flammtemperatur wirkt sich in einem Bereich über 1000° unmittelbar auf den NOX-Wert des Abgases der Flamme aus.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Infrarotstrahlers in Form eines Dunkelstrahlers und
- Figur 2: die schematische Darstellung eines Infrarotstrahlers in Form eines Hellstrahlers (nicht beansprucht).

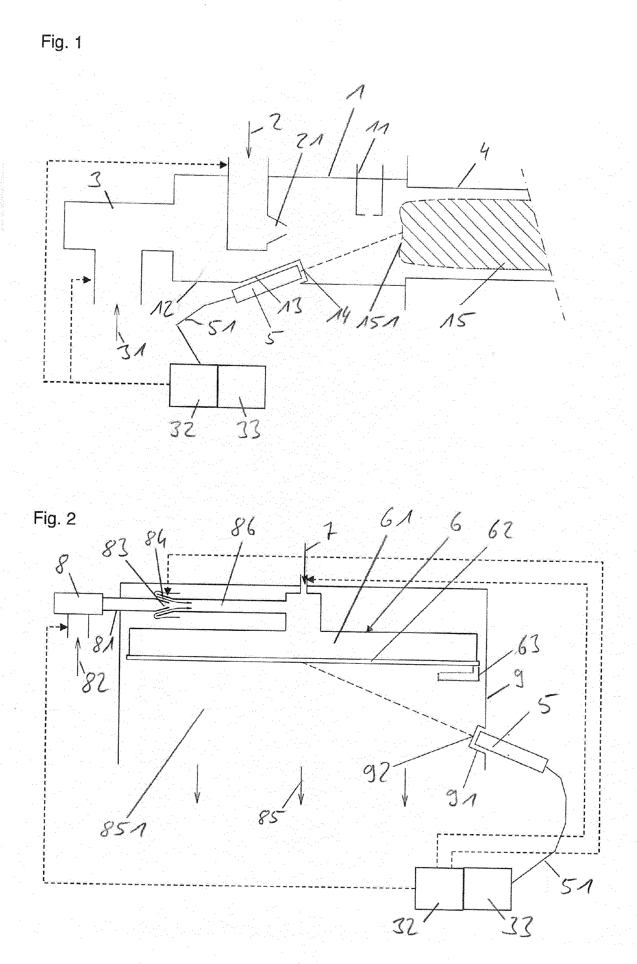

Der als Ausführungsbeispiel gewählte Dunkelstrahler gemäß Figur 1 umfasst einen Brenner 1, der mit einem Gebläse 3 verbunden ist und an den sich ein Strahlrohr 4 anschließt. Das Strahlrohr 4 ist in Figur 1 lediglich angedeutet; das Strahlrohr 4 kann sich durchaus über einige Meter Länge erstrecken und aus mehreren Strahlrohrelementen gebildet sein. Im Ausführungsbeispiel ist das Strahlrohr 4 als hochhitzebeständiges Edelstahlrohr ausgebildet. Alternativ können auch Sonderstähle mit einer thermisch aufgebrachten Aluminiumoxidschicht zum Einsatz kommen. Das Strahlrohr 4 ist im Ausführungsbeispiel von einem - nicht dargestellten - Reflektor eingefasst, der im Ausführungsbeispiel aus oberflächenstrukturiertem Aluminiumblech ausgebildet ist und der auf beiden Seiten Schottbleche zur Reduktion konvektiver Verluste aufweist.

Der Brenner 1 umfasst eine Gasdüse 21, die mit einer Wasserstoffzuführung 2 verbunden ist. Beabstandet zu der Gasdüse 21 ist in dem Brenner 1 eine Zündelektrode 11 angeordnet. An seinem der Zündelektrode 11 abgewandten Seite des Brenners 1 ist das Gebläse 3 derart angestellt, dass es die Gasdüse 21 mit Verbrennungsluft umspült. Hierzu ist das Gebläse 3 saugseitig mit einer Verbrennungsluftzuführung 31 verbunden.

Der aus der Gasdüse 21 in den Brenner 1 unter Druck austretende Wasserstoffstrom vermischt sich mit dem Verbrennungsluftstrom, der die Gasdüse 21 umspült und wird bei Erreichen des erforderlichen Mischungsverhältnisses durch die beabstandet zu der Gasdüse 21 angeordnete Zündelektrode 11 entzündet, wodurch in einem Abstand zur Gasdüse 21 eine Flamme 15 gebildet ist, die sich über die Länge des Strahlrohrs 4 in dieses erstreckt. In dem nicht zündfähigen Bereich 22 des Wasserstoffstroms, der kein ausreichendes Mischungsverhältnis mit Verbrennungsluft aufweist, ergibt sich keine Flammbildung.

In dem Gehäuse 12 des Brenners 1 ist eine Sensoraufnahme 13 eingebracht, die ein Fenster 14 aufweist. In die Sensoraufnahme 13 ist ein UV-Sensor 5 eingebracht, der über eine elektrische Leitung 51 mit einer Stelleinrichtung 32 zur Unterbrechung der Wasserstoffzuführung 2 verbunden ist. Der UV-Sensor 5 ist im Ausführungsbeispiel mittig auf den Flammengrund 151 der Flamme 15 gerichtet. Wird durch den UV-Sensor 5 keine Flamme 15 detektiert, so wird die Wasserstoffzufuhr durch die Stelleinrichtung 32 unterbrochen. Das mit der Stelleinrichtung 32, vorliegend ein Stellventil, verbundene Steuer- und Regelmodul 33 ist hier zusätzlich mit der Zündelektrode 11 verbunden und derart eingerichtet, dass in dem Fall, dass keine Flamme detektiert wird, zunächst die Zündelektrode 11 aktiviert wird und erst nach weiterem Ausbleiben einer Flamme eine Unterbrechung der Wasserstoffzufuhr erfolgt.

In einer optionalen Erweiterung kann das Gebläse 3 an seiner Saugseite mit einem Ejektor verbunden sein, dessen Treibanschluss mit einer Verbrennungsluftzuführung 31 und dessen Sauganschluss mit einer Abgaszuführung verbunden ist, die von einer Abgasleitung gespeist ist, die abgasseitig mit dem Strahlrohr 4 verbunden ist. Die durch das Gebläse 3 angesaugte Verbrennungsluft dient hier als Treibmedium, durch das eine Ansaugung des Abgases bewirkt ist.

Druckseitig wird hierdurch der Gasdüse 21 durch das Gebläse 3 ein Abgas-Verbrennungsluft-Gemisch zugeführt, das die Gasdüse 21 umspült. Das Abgas-Verbrennungsluft-Gemisch weist einen reduzierten Sauerstoffgehalt auf, wodurch eine Flamme mit reduzierter Temperatur bewirkt ist. Aufgrund der hohen Reaktionsfreudigkeit von Wasserstoff reicht auch ein geringer Sauerstoffgehalt in dem Abgas-Verbrennungsluft-Gemisch zur Zündung aus, wodurch eine sich durch das Strahlrohr 4 erstreckende Flamme 15 erzeugt wird. Durch eine in der Abgasleitung oder in dem Ejektor angeordnete Verstelleinrichtung, beispielsweise eine Verstellblende oder ein Stellventil, ist das Mischungsverhältnis von Abgasvolumenstrom und Verbrennungsluftvolumenstrom einstellbar.

Im Ausführungsbeispiel ist der UV-Sensor 5 zur NOX-Messung mittels UV-Resonanz-Absorptionsspektroskopie eingerichtet und mit dem Steuer- und Regelmodul 33 verbunden. Das Steuer- und Regelmodul 33 ist dabei derart programmiert, dass der von dem UV-Sensor 5 gelieferte NOX-Istwert mit einem hinterlegten Sollwert verglichen wird und basierend auf der Differenz der beiden Werte die Flammeigenschaften durch Veränderung des Wasserstoffvolumenstroms und/oder des Verbrennungsluftvolumenstroms einzuregeln. Hierzu ist das Steuer- und Regelmodul 33 mit der Stelleinrichtung 32 verbunden, über die der Wasserstoffvolumenstrom und der Verbrennungsluftvolumenstrom einstellbar ist. Ist das Gebläse 3 mit dem vorstehend beschriebenen Ejektor versehen, so kann die Programmierung zusätzlich eine Einregelung der Flammeigenschaften über eine Verstellung des Verhältnisses von Abgasstrom und Verbrennungsluftstrom vornehmen. Hierzu ist die Verstelleinrichtung mit dem Steuer- und Regelmodul 33 verbunden. Die Stelleinrichtung 32 und das Steuer- und Regelmodul 33 sind in den Figuren lediglich schematisch angedeutet und über gestrichelte Linien mit den Wirkstellen verbunden.

Ist das Gebläse 3 entsprechend dem Ausführungsbeispiel gemäß Figur 2 saugseitig mit einem Ejektor verbunden, über den eine Zumischung eines Abgasstroms zum Verbrennungsluftstrom erfolgt, so kann der Ejektor oder die diesen saugseitig speisende Abgaszuführungsleitung mit einer Verstelleinrichtung versehen sein, über die das Mischungsverhältnis von Abgasstrom und Verbrennungsluftstrom einstellbar ist. Ist der UV-Sensor zur UV-Resonanz-Absorptionsspektroskopie eingerichtet, so ist eine Regelung der Flammtemperatur auf Basis eines von dem UV-Sensor detektierten NOX-Gehaltes möglich. Hierzu ist der Sensor zweckmäßigerweise mit einem Regelmodul verbunden, dessen Sollgröße ein vorgegebener Soll-NOX-Wert ist, wobei der Ist-NOX-Wert von dem UV-Sensor geliefert wird. Auf Basis der Differenz zwischen Soll- und Istwert kann über die Ansteuerung der Verstelleinrichtung eine Verstellung des Mischungsverhältnisses von Abgasstrom und Verbrennungsluftstrom erfolgen, wodurch eine Veränderung der Temperatur der Flamme 6 bewirkt ist, was wiederum eine Änderung des NOX-Istwertes bewirkt.

Im Ausführungsbeispiel gemäß Figur 2 ist der Infrarotstrahler als Hellstrahler ausgebildet und umfasst einen Brenner 6, der mit einer Wasserstoffzuführung 7 und einem Gebläse 8 verbunden ist. Den Brenner 6 umfassend ist ein Reflektor 9 angeordnet. Der als Hellstrahler ausgebildete Infrarotstrahler gemäß Figur 2 ist als solcher nicht beansprucht.

Der Brenner 6 umfasst eine Brennstoffmischkammer 61, die von einer keramischen Strahlplatte 62 begrenzt ist. Die keramische Strahlplatte 62 ist in bekannter Art und Weise mit einem sich über die gesamte Fläche erstreckenden Lochmuster versehen, das aus zylindrischen Flammdurchtrittskanälen gebildet ist, die an der nach außen gerichteten Seite der Strahlplatte 62 sich konisch erweiternd ausgebildet sind. Der Strahlplatte 62 gegenüberliegend ist orthogonal zu dieser eine Wasserstoffzuführung 7 angeordnet, die in der Brennstoffmischkammer 61 mündet. Rechtwinklig zur Wasserstoffzuführung 7 mündet eine Druckleitung 81 in der Brennstoffmischkammer 61, die mit dem Gebläse 8 verbunden ist.

Das Gebläse 8 ist saugseitig mit einer Verbrennungsluftzuführung 82 verbunden, wobei in der Druckleitung 81 innerhalb des Reflektors 4 ein Ejektor 83 eingesetzt ist, durch den ein die Druckleitung 81 radial umspannender Saugspalt 84 gebildet ist. Der sich an den Ejektor 83 anschließende Abschnitt der Druckleitung 81 bildet einen Verbrennungsluft-Mischraum 86 aus. Der durch das Gebläse 8 durch die Verbrennungsluftzuführung 82 angesaugte Verbrennungsluftstrom dient hier als Treibmedium, durch das eine Ansaugung eines Teils des innerhalb des Reflektors 9 befindlichen Abgaspolsters 851 durch den Saugspalt 84 bewirkt ist. Der übrige Abgasstrom 85 strömt aus dem Reflektor 9 in die Umgebungsluft. Über eine in dem Ejektor 83 vorhandene Verstelleinrichtung ist die Breite des Saugspaltes 84 einstellbar, wodurch wiederum der Anteil des Abgasstroms 85 in dem Abgas-Verbrennungsluftstrom-Gemisch und damit dessen Sauerstoffgehalt einstellbar ist.

Das aus der dem Verbrennungsluft-Mischraum 86 der Druckleitung 81 austretende Abgas-Verbrennungsluft-Gemisch wird in der Brennstoffmischkammer 61 mit dem durch die Wasserstoffzuführung 7 eingebrachten Wasserstoffstrom vermischt und wiederum nach Austritt durch die Strahlplatte 62 durch eine an dem Brenner 6 außen vor der Strahlplatte 62 angeordnete die Zündelektrode 63 entzündet.

In dem Reflektor 9 ist eine Sensoraufnahme 91 eingebracht, die ein Fenster 92 aufweist. In die Sensoraufnahme ist ein UV-Sensor 5 eingebracht, der über eine elektrische Leitung 51 mit einer Stelleinrichtung 32 zur Unterbrechung der Wasserstoffzufuhr verbunden ist. Der UV-Sensor 5 ist im Ausführungsbeispiel in einem Winkel von 45° zur Strahlplatte 62 ausgerichtet. Wird durch den UV-Sensor 5 keine Flamme detektiert, so wird die Wasserstoffzufuhr durch die Stelleinrichtung 32, vorliegend ein Stellventil, unterbrochen. Die Stelleinrichtung 32 oder das mit dieser verbundene Steuer- und Regelmodul 33 kann auch hier zusätzlich mit der Zündelektrode 63 verbunden und derart eingerichtet sein, dass in dem Fall, dass keine Flamme detektiert wird, zunächst die Zündelektrode 63 aktiviert wird und erst nach weiterem Ausbleiben einer Flamme eine Unterbrechung der Wasserstoffzufuhr erfolgt.

Auch bei diesem - nicht beanspruchten - Ausführungsbeispiel kann ein UV-Sensor 5 eingesetzt sein, der zur NOX-Messung mittels UV-Resonanz-Absorptionsspektroskopie eingerichtet und mit einem Steuer- und Regelmodul verbunden ist, das mit der Stelleinrichtung 32 zur Unterbrechung des Wasserstoffstroms und/oder des Verbrennungsluftstroms verbunden ist, wobei das Steuer- und Regelmodul 33 entsprechend der vorstehenden Ausführungen zum Dunkelstrahler programmiert ist. Zusätzlich kann die Programmierung eine Einregelung der Flammeigenschaften über eine Verstellung des Verhältnisses von Abgasstrom und Verbrennungsluftstrom über die Verstelleinrichtung des Ejektors 83 vornehmen. Hierzu ist die Verstelleinrichtung mit dem Steuer- und Regelmodul 33 verbunden.

## Patentansprüche

1. Infrarotstrahler, mit einem Brenner (1) und einem Gebläse (3), wobei der Brenner mit einer Brenngaszuführung (2) verbunden ist, wobei das Gebläse dazu eingerichtet ist, dem Brenner Verbrennungsluft zuzuführen, wobei die Brenngaszuführung mit einer Wasserstoffquelle als Brenngasquelle verbindbar ist, wobei ein UV-Sensor (5) angeordnet ist, der eingerichtet ist, wenigstens einen Parameter der durch den Brenner erzeugten Flamme zu detektieren, **dadurch gekennzeichnet, dass** der Infrarotstrahler ein Dunkelstrahler ist, der ein Strahlrohr (4) umfasst, in dem der Brenner angeordnet ist, wobei der UV-Sensor auf den Grund der Flamme ausgerichtet ist.

2. Infrarotstrahler nach Anspruch 1, **dadurch gekennzeichnet, dass** das Strahlrohr mit einem Sichtfenster (14) versehen ist, wobei der UV-Sensor von außerhalb des Strahlrohres durch das Sichtfenster auf den Grund der Flamme ausgerichtet ist.

3. Infrarotstrahler nach Anspruch 1 oder 2, **dadurch gekennzeichnet, dass** das Strahlrohr mit einer Abgasabführleitung verbunden ist, wobei dem Brenner in Flammrichtung vorgeschaltet eine Verbrennungsluft-Mischkammer (61) angeordnet ist, die mit einer Verbrennungsluftquelle und der Abgasabführleitung verbunden ist.

4. Infrarotstrahler nach Anspruch 3, **dadurch gekennzeichnet, dass** das Gebläse dem Brenner in Flammrichtung vorgeschaltet angeordnet ist und die Verbrennungsluft-Mischkammer (61) innerhalb des Gebläses angeordnet ist.

5. Infrarotstrahler nach Anspruch 3 oder 4, **dadurch gekennzeichnet, dass** an der Abführleitung eine Verstelleinrichtung angeordnet ist, durch welche das Verhältnis des Abgasvolumenstroms der Abgasabführleitung zum Verbrennungsluft-Volumenstrom der Verbrennungsluftquelle einstellbar ist.

6. Infrarotstrahler nach einem der vorgenannten Ansprüche, **dadurch gekennzeichnet, dass** der UV-Sensor mit einer mit der Brenngaszuführung verbundenen Stelleinrichtung (32) zur Unterbrechung und/oder zur Einstellung der Wasserstoffzufuhr verbunden ist.

7. Infrarotstrahler nach einem der vorgenannten Ansprüche, **dadurch gekennzeichnet, dass** der UV-Sensor (5) zur NOX-Messung insbesondere mittels UV-Resonanz-Absorptionsspektroskopie eingerichtet ist.

8. Infrarotstrahler nach Anspruch 5 und/oder nach Anspruch 6, **dadurch gekennzeichnet, dass** die Stelleinrichtung und/oder die Verstelleinrichtung mit einem Steuer- und Regelmodul (33) verbunden ist, das programmiert ist, die Flammeigenschaften durch Vergleich der von dem UV-Sensor übermittelten Ist-Parameter mit einem hinterlegten Sollparameter durch Veränderung des Wasserstoffvolumenstroms und/oder des Verbrennungsluftvolumenstroms und/oder des Verhältnisses von Abgasstrom und Verbrennungsluftstrom einzuregeln.

9. Infrarotstrahler nach Anspruch 8, **dadurch gekennzeichnet, dass** der Ist-Parameter ein von dem UV-Sensor detektierter NOX-Wert ist, wobei das Steuer- und Regelmodul (33) programmiert ist, auf Basis der Differenz des Ist-Wertes mit einem hinterlegten Sollwert die Flammtemperatur durch Veränderung des Wasserstoffstroms und/oder Verbrennungsluftstroms und/oder des Verhältnisses von Abgasstrom und Verbrennungsluftstrom einzuregeln.

## Claims

1. Infrared radiator with a burner (1) and a fan (3), wherein the burner is connected to a fuel gas supply (2), wherein the fan is set up to supply the burner with combustion air, wherein the fuel gas supply can be connected to a hydrogen source as fuel gas source, wherein a UV sensor (5) is arranged, which is set up to detect at least one parameter of the flame generated by the burner, **characterised in that** the infrared radiator is a dark radiator, which comprises a radiant tube (4), in which the burner is arranged, wherein the UV sensor is aligned with the base of the flame.

2. Infrared radiator according to claim 1, **characterised in that** the radiant tube is provided with a viewing window (14), wherein the UV sensor is aligned with the base of the flame from outside the radiant tube through the viewing window.

3. Infrared radiator according to claim 1 or 2, **characterised in that** the radiant tube is connected to an exhaust gas discharge line, wherein a combustion air mixing chamber (61) is arranged upstream of the burner in the flame direction, which is connected to a combustion air source and the exhaust gas discharge line.

4. Infrared radiator according to claim 3, **characterised in that** the fan is arranged upstream of the burner in the flame direction and the combustion air mixing chamber (61) is arranged inside the fan.

5. Infrared radiator according to claim 3 or 4, **characterised in that** an adjusting device is arranged on the discharge line, by means of which the ratio of the exhaust gas volume flow of the exhaust gas discharge line to the combustion air volume flow of the combustion air source can be adjusted.

6. Infrared radiator according to one of the previous claims, **characterised in that** the UV sensor is connected to an actuating device (32) connected to the fuel gas supply for interrupting and/or adjusting the hydrogen supply.

7. Infrared radiator according to one of the previous claims, **characterised in that** the UV sensor (5) is set up for NOX measurement, in particular by means of UV resonance absorption spectroscopy.

8. Infrared radiator according to claim 5 and/or claim 6, **characterised in that** the actuating device and/or the adjusting device is connected to a control and regulation module (33), which is programmed to adjust the flame properties by comparing the actual parameters transmitted by the UV sensor to a stored setpoint parameter by changing the hydrogen volume flow and/or the combustion air volume flow and/or the ratio of exhaust gas flow and combustion air flow.

9. Infrared radiator according to claim 8, **characterised in that** the actual parameter is a NOX value detected by the UV sensor, wherein the control and regulation module (33) is programmed to regulate the flame temperature on the basis of the difference between the actual value and a stored setpoint value by changing the hydrogen flow and/or combustion air flow and/or the ratio of exhaust gas flow and combustion air flow.

## Revendications

1. Radiateur infrarouge, comprenant un brûleur (1) et une soufflerie (3), sachant que le brûleur est relié avec un dispositif d'amenée (2) de gaz combustible, sachant que la soufflerie est configurée pour amener de l'air de combustion au brûleur, sachant que le dispositif d'amenée de gaz combustible est reliable avec une source d'hydrogène en tant que source (2) de gaz combustible, sachant qu'est disposé un capteur d'ultraviolets (5) configuré pour détecter au moins un paramètre de la flamme générée par le brûleur, **caractérisé en ce que** le radiateur infrarouge est un radiateur obscur entourant un tube radiant (4) dans lequel est disposé le brûleur, sachant que le capteur d'ultraviolets est orienté vers la base de la flamme.

2. Radiateur infrarouge selon la revendication 1, **caractérisé en ce que** le tube radiant est muni d'un hublot (14), sachant que le capteur d'ultraviolets est orienté, de l'extérieur du tube radiant, à travers le hublot, vers la base de la flamme.

3. Radiateur infrarouge selon la revendication 1 ou 2, **caractérisé en ce que** le tube radiant est relié avec une conduite d'évacuation des gaz brûlés, sachant qu'est disposée en amont du brûleur, dans le sens de la flamme, une chambre mélangeuse (61) d'air de combustion qui est reliée avec une source d'air de combustion et avec la conduite d'évacuation des gaz brûlés.

4. Radiateur infrarouge selon la revendication 3, **caractérisé en ce que** la soufflerie est disposée en amont du brûleur dans le sens de la flamme et que la chambre mélangeuse (61) d'air de combustion est disposée à l'intérieur de la soufflerie.

5. Radiateur infrarouge selon la revendication 3 ou 4, **caractérisé en ce que** contre la conduite d'évacuation est disposé un dispositif d'ajustement à travers lequel est réglable la proportion entre le flux volumique de gaz brûlés de la conduite d'évacuation de ces gaz et le flux volumique d'air de combustion venant de la source de cet air.

6. Radiateur infrarouge selon l'une des revendications précédentes, **caractérisé en ce que** le capteur d'ultraviolets est connecté avec un dispositif d'ajustement (32) lui-même relié avec le dispositif d'amenée de gaz combustible, afin d'interrompre et/ou de régler l'amenée d'hydrogène.

7. Radiateur infrarouge selon l'une des revendications précédentes, **caractérisé en ce que**, le capteur d'ultraviolets (5) est configuré pour mesurer le NOx, notamment permettant une spectroscopie par absorption et résonance dans l'ultraviolet.

8. Radiateur infrarouge selon la revendication 5 et/ou selon la revendication, **caractérisé en ce que** le dispositif de réglage et/ou le dispositif d'ajustement est/sont relié(s) avec un module de commande et régulation (33), module qui est programmé pour réguler les caractéristiques de la flamme en comparant les valeurs paramétriques réelles transmises par le capteur d'ultraviolets avec une valeur paramétrique de consigne en mémoire, en modifiant le flux volumique de l'hydrogène et/ou le flux volumique de l'air de combustion et/ou en modifiant la proportion entre le flux de gaz brûlés et le flux d'air de combustion.

9. Radiateur infrarouge selon la revendication 8, **caractérisé en ce que** la valeur paramétrique réelle est une valeur du NOx détectée par le capteur d'ultraviolets, sachant que le module de commande et régulation (33) est programmé pour réguler la température de la flamme, sur la base de la différence entre la valeur réelle et une valeur de consigne en mémoire, en modifiant le flux d'hydrogène et/ou le flux d'air combustible et/ou la proportion entre le flux de gaz brûlés et le flux d'air de combustion.
